# EUROPEAN PATENT APPLICATION

(11) **EP 4 154 730 A1**
(43) Date of publication of application: **29.03.2023**
(21) Application number: 21218014.5
(22) Date of filing: 28.12.2021
(51) Int. Cl.: A23L 19/00, A23L 3/26

(54) **DATE FRUIT REFERENCE MATERIAL AND USE THEREOF**

(71) Applicant: King Khalid University, 62529 Abha (SA)
(72) Inventor: IDRIS, Abubakr M., Abha 61413 (SA); FAWY, Khalid F., Abha 61413 (SA); EBRAHIM, Ammar M., Alahssa 31982 (SA)
(74) Representative: Engelhard, Markus

(57) **Abstract**

The invention relates to a composition comprising a date fruit or component(s) thereof, wherein said composition is a homogenized, irradiated composition. The invention further relates to a use of a composition comprising a date fruit or component(s) thereof as a reference material. The invention also relates to a method of preparing a homogenized, irradiated composition comprising a date fruit or component(s) thereof.

## Description

### FIELD OF THE INVENTION

The invention relates to a composition comprising a date fruit or component(s) thereof, wherein said composition is a homogenized, irradiated composition. The invention further relates to a use of a composition comprising a date fruit or component(s) thereof as a reference material. The invention also relates to a method of preparing a homogenized, irradiated composition comprising a date fruit or component(s) thereof. The inventors extend their appreciation to the Deputyship for Research & Innovation, Ministry of Education in Saudi Arabia for funding this work through the project number IFP-KKU-2020/4.

### BACKGROUND OF THE INVENTION

Public confidence in the results of measurement is important in many aspects of modern society, including consumer protection in food consumption, health-care, environmental protection and fair trade. Reference materials (RM), particularly certified reference materials (CRMs), are the cornerstones of the quality of measurements. CRMs allow for accreditation process for laboratories, instrument calibration, testing validity of tools used in chemical analysis, validation of analytical methods, examination of infrequently used methods, troubleshooting in chemical analysis, verification of the correct use of an analytical method, and calibration of analytical systems. For example, CRMs can be used to ensure the quality of food analytical results for the purposes of monitoring food safety and food quality as well as environmental monitoring.

Generally the demand for reference materials exceeds the reference material supply in terms of the range of materials along with matrices and the levels of certified analytes thereof. For many materials such as particular fruit types, no corresponding reference material or only a limited selection of reference materials is available. The user has to choose the most suitable reference material available for a sample material to be analyzed, in terms of matrices and the levels of certified analytes thereof, and often has no choice of alternative RMs. Thus, in cases in which there is no corresponding reference material available for a sample material to be analyzed, the user has to select a reference material for a material that is similar to the sample material to be analyzed. However, the use of reference materials which do not correspond to the sample material to be analyzed limits the accuracy of the analysis. When a reference material for a first fruit type is used for analyzing a second fruit type since a reference material for the second fruit type is not available, the result of the analysis may be imprecise, e.g. due to differences in the matrices of the first fruit type and the second fruit type. Thus, a suitable reference material for each of a broad spectrum of materials is needed.

For example, there is a lack of available reference materials of date fruit. In particular, there is a lack of suitable reference materials for analyzing fruits of date palms e.g. of *Phoenix dactylifera* L. Thus, there is the need to provide reference materials for fruits of date palms such as *Phoenix dactylifera* L. Furthermore, there is the need to provide certified reference materials for fruits date palms which allow to analyze food quality and/or environmental pollution of date palms. There is also the need to provide methods of preparing a standardized composition comprising date fruit.

### SUMMARY OF THE INVENTION

In the following, the elements of the invention will be described. These elements are listed with specific embodiments, however, it should be understood that they may be combined in any manner and in any number to create additional embodiments. The variously described examples and preferred embodiments should not be construed to limit the present invention to only the explicitly described embodiments. This description should be understood to support and encompass embodiments which combine two or more of the explicitly described embodiments or which combine the one or more of the explicitly described embodiments with any number of the disclosed and/or preferred elements. Furthermore, any permutations and combinations of all described elements in this application should be considered disclosed by the description of the present application unless the context indicates otherwise.

In a first aspect, the present invention relates to a composition comprising a date fruit or component(s) thereof, wherein said composition is a homogenized, irradiated composition.

In one embodiment, said composition is a powder, granules, pulp, paste, dispersion, or suspension, preferably a powder.

In one embodiment, said composition is a composition irradiated with ionizing irradiation, preferably gamma ray irradiation, x-ray irradiation, and/or electron beam irradiation.

In one embodiment, said composition comprises
Na in an amount of from 20 µg/g to 90 µg/g, preferably 30 µg/g to 80 µg/g, e.g. about 35 µg/g to about 75 µg/g;
Mg in an amount of from 500 µg/g to 800 µg/g, preferably 520 µg/g to 765 µg/g, e.g. about 550 µg/g to about 740 ng/g;
P in an amount of from 400 µg/g to 850 µg/g, preferably 450 µg/g to 800 µg/g, e.g. about 490 µg/g to about 755 µg/g;
K in an amount of from 5000 µg/g to 8500 µg/g, preferably 6200 µg/g to 7900 µg/g, e.g. about 6400 µg/g to about 7650 µg/g;
Ca in an amount of from 500 µg/g to 900 µg/g, preferably 580 µg/g to 820 µg/g, e.g. about 600 µg/g to about 800 µg/g;
Cr in an amount of from 0.3 µg/g to 1.2 µg/g, preferably 0.45 µg/g to 1.15 µg/g, e.g. about 0.55 µg/g to about 0.98 µg/g;
Mn in an amount of from 3 µg/g to 7.5 µg/g, preferably 3.5 µg/g to 6.6 µg/g, e.g. about 3.6 µg/g to about 6.5 µg/g;
Fe in an amount of from 20 µg/g to 48 µg/g, preferably 22 µg/g to 46.5 µg/g, e.g. about 23.6 µg/g to about 43.5 µg/g;
Cu in an amount of from 2 µg/g to 4 µg/g, preferably 2.5 µg/g to 3.8 µg/g, e.g. about 2.6 µg/g to about 3.65 µg/g; and/or
Zn in an amount of from 3 µg/g to 10 µg/g, preferably 4.6 µg/g to 9.5 µg/g, e.g. about 5 µg/g to about 8.8 µg/g.

In one embodiment, said composition comprises
Na in an amount of from 36.75 µg/g to 73 µg/g,
Mg in an amount of from 550 µg/g to 740 µg/g;
P in an amount of from 492 µg/g to 755 µg/g;
K in an amount of from 6410 µg/g to 7620 µg/g;
Ca in an amount of from 600 µg/g to 800 µg/g;
Cr in an amount of from 0.575 µg/g to 0.960 µg/g;
Mn in an amount of from 3.6 µg/g to 6.5 µg/g;
Fe in an amount of from 23.69 µg/g to 43.44 µg/g;
Cu in an amount of from 2.65 µg/g to 3.60 µg/g; and/or
Zn in an amount of from 5.0 µg/g to 8.751 µg/g.

In one embodiment, said date fruit is of a species selected from *Phoenix dactylifera, Phoenix acaulis, Phoenix atlantica, Phoenix caespitosa, Phoenix canariensis, Phoenix loureiroi, Phoenix paludosa, Phoenix pusilla, Phoenix reclinata, Phoenix roebelenii, Phoenix rupicola, Phoenix sylvestris, Phoenix theophrasti;* preferably *Phoenix dactylifera;* more preferably *Phoenix dactylifera* L.

In one embodiment, said date fruit is of a variety selected from *Kholas, Ajwah, Al-Khunaizi, Amir Hajj, Bouffegous, Dabbas, Datça, Dayri, Empress, Fardh, Ftimi, Holwah, Haleema, Hayany, Iteema, Kenta, Khadrawi, Khastawi, Khenaizi, Lulu, Medjool, Mishriq, Mazafati, Nabtat-seyf, Piarom, Safawi, Sag'ai, Saidy, Sayer, Safrir, Sukkary, Sellaj, Indi, Tagyat, Tamej, Thoory, Umeljwary, Umelkhashab, Zahidi,* and *Zaghloul*; preferably *Kholas.*

In one embodiment, said date fruit is of a variety *Kholas.*

In one embodiment, said composition comprises or consists of particles having a particle size < 850 µm.

In one embodiment, said composition is a reference material, preferably a certified reference material, more preferably a certified reference material of date fruit elemental composition.

In one embodiment, said composition comprises nitrogen, oxygen, and silicon in a ratio of 6-9 : 80-85 : 4-7, preferably in a ratio of 7-8 : 82-83 : 5-6, e.g. about 7.7 : 82.1 : 5.8, respectively.

In a further aspect, the present invention relates to a use of a composition, as defined above, as a reference material, e.g. certified reference material, preferably for analyzing food quality and/or environmental pollution.

In one embodiment, said use of a composition, as defined herein, as a reference material comprises one or more of the following applications:
- an accreditation process for a laboratory,
- instrument calibration,
- testing validity of tools, e.g. tools used in chemical analysis,
- validation of an analytical method,
- examination of a method, e.g. examination of an infrequently used method,
- troubleshooting, e.g. in chemical analysis,
- verification, e.g. verification of a correct use of an analytical method.

In a further aspect, the present invention relates to a method of preparing a homogenized, irradiated composition comprising a date fruit or component(s) thereof, preferably a composition as defined above, wherein said method comprises the steps:
a) providing a date fruit;
b) optionally, drying said date fruit, e.g. by freeze drying, heat drying, or vacuum drying, preferably heat drying in an oven at a temperature of from 40°C to 90°C, e.g. about 70°C;
c) homogenizing said date fruit to obtain a homogenized mixture; optionally by using a grinder;
d) irradiating said homogenized mixture of step c) to obtain an irradiated mixture, preferably by gamma ray irradiation, x-ray irradiation, and/or electron beam irradiation;
e) homogenizing said irradiated mixture of step d), preferably by using a grinder;
f) obtaining a homogenized, irradiated composition; preferably a homogenized, irradiated composition in the form of a powder;
g) optionally, storing said homogenized, irradiated composition in a light protected container.

In one embodiment, said date fruit provided in step a) has a maturity stage selected from kimri, khalal, rotab, and tamar, preferably selected from rotab and tamar.

In one embodiment, said irradiating in step d) comprises subjecting said homogenized mixture of step c) to irradiation, e.g. ionizing irradiation, preferably gamma ray irradiation, x-ray irradiation, and/or electron beam irradiation; wherein, preferably, an ionizing radiation dose absorbed by said homogenized mixture is in the range of from 1 kGy to 100 kGy, preferably 5 kGy to 50 kg, more preferably 10 kGy to 40 kGy, even more preferably 15 kGy to 35 kGy, e.g. about 25 kGy.

In one embodiment, said composition and said date fruit are as defined above.

In a further aspect, the present invention relates to a product obtained by a method of preparing a homogenized, irradiated composition comprising a date fruit or component(s) thereof, as defined above.

In a further aspect, the present invention relates to a kit comprising a composition, as defined above, and a manual, preferably certificate, specifying an amount of Na, Mg, P, K, Ca, Cr, Mn, Fe, Cu, and/or Zn comprised by said composition.

In one embodiment, said amount(s) of Na, Mg, P, K, Ca, Cr, Mn, Fe, Cu, and/or Zn comprised by said composition is/are as defined above.

In one embodiment, said manual, preferably certificate, further comprises instructions for a use of said composition as a reference material, preferably a use as defined above.

In a further aspect, the present invention relates to a composition comprising
Na in an amount of from 20 µg/g to 90 µg/g, preferably 30 µg/g to 80 µg/g, e.g. about 35 µg/g to about 75 µg/g;
Mg in an amount of from 500 µg/g to 800 µg/g, preferably 520 µg/g to 765 µg/g, e.g. about 550 µg/g to about 740 ng/g;
P in an amount of from 400 µg/g to 850 µg/g, preferably 450 µg/g to 800 µg/g, e.g. about 490 µg/g to about 755 µg/g;
K in an amount of from 5000 µg/g to 8500 µg/g, preferably 6200 µg/g to 7900 µg/g, e.g. about 6400 µg/g to about 7650 µg/g;
Ca in an amount of from 500 µg/g to 900 µg/g, preferably 580 µg/g to 820 µg/g, e.g. about 600 µg/g to about 800 µg/g;
Cr in an amount of from 0.3 µg/g to 1.2 µg/g, preferably 0.45 µg/g to 1.15 µg/g, e.g. about 0.55 µg/g to about 0.98 µg/g;
Mn in an amount of from 3 µg/g to 7.5 µg/g, preferably 3.5 µg/g to 6.6 µg/g, e.g. about 3.6 µg/g to about 6.5 µg/g;
Fe in an amount of from 20 µg/g to 48 µg/g, preferably 22 µg/g to 46.5 µg/g, e.g. about 23.6 µg/g to about 43.5 ng/g;
Cu in an amount of from 2 µg/g to 4 µg/g, preferably 2.5 µg/g to 3.8 µg/g, e.g. about 2.6 µg/g to about 3.65 µg/g; and/or
Zn in an amount of from 3 µg/g to 10 µg/g, preferably 4.6 µg/g to 9.5 µg/g, e.g. about 5 µg/g to about 8.8 µg/g.

In one embodiment, said composition comprises
Na in an amount of from 36.75 µg/g to 73 µg/g,
Mg in an amount of from 550 µg/g to 740 µg/g;
P in an amount of from 492 µg/g to 755 µg/g;
K in an amount of from 6410 µg/g to 7620 µg/g;
Ca in an amount of from 600 µg/g to 800 µg/g;
Cr in an amount of from 0.575 µg/g to 0.960 µg/g;
Mn in an amount of from 3.6 µg/g to 6.5 µg/g;
Fe in an amount of from 23.69 µg/g to 43.44 µg/g;
Cu in an amount of from 2.65 µg/g to 3.60 µg/g; and/or
Zn in an amount of from 5.0 µg/g to 8.751 µg/g.

### DETAILED DESCRIPTION

This invention relates to a development of a certified reference material (CRM) of the matrix of date fruit. The invention further relates to an elemental analytical method of the relevant matrix as well as testing homogeneity methods. The invention also relates to the certification some macro element (potassium), micro (sodium, magnesium, phosphorus, and calcium) and trace elements (chromium, manganese, iron, copper, and zinc). The inventors have developed the first date fruit certified reference material.

The composition of the invention comprises components of date palm, preferably of the fruits of date palm, e.g. of *Phoenix dactylifera L.* The advantage of the composition of the invention is that it can be used to analyze the quality of date products as well as all kinds of fruit having similar chemical composition (e.g. richness in carbohydrates (such as glucose, fructose, and sucrose), vitamins, fibers, and minerals (elements)), e.g. whether such date products are contaminated with environmental contaminants. A further advantage of the composition of the invention is that the composition can be used to assess analytical methods for elemental analysis of dates. In particular, the composition can be applied for testing the accuracy of analytical results of dates fruit and relevant fruits, for example for monitoring the quality of food and the environment. A further advantage of the composition of the invention is that it can be applied for laboratory accreditation, laboratory internal quality control, laboratory external quality assurance (proficiency testing), training practitioners, instrument calibration, troubleshooting, analytical method validation, checking infrequently used methods, and verification of the correct use of an analytical method, in addition to suitability check of equipment, reagents and standards.

The present invention provides a certified reference material for a macro element (potassium), micro elements (sodium, magnesium, phosphorus, and calcium) and trace elements (chromium, manganese, iron, copper, and zinc). Advantageously, the composition of the invention can be used for analyzing food safety and for environmental monitoring. For example, potassium, magnesium, manganese and iron are indicators for monitoring the health of date palms. The composition of the invention thus can be used for monitoring the health of date palms.

Certified reference materials which do not match the matrices of samples to be analyzed, are not suitable to be used for quality assurance of analysis for all food samples. However, analytical results have to be reliable because of the importance of such analytical results for commercial and health aspects of products such as food product. From an analytical point of view, food samples typically comprise complex matrices with various chemical species. Thus, the reference material has to be selected to match the matrix of the respective sample in the best available way. The advantage of the composition of the invention is that its matrix and analyte levels match date fruits. Thus, the composition of the invention allows to analyze date fruit samples, such as date fruit food products. Advantageously, the composition of the invention allows for accurate results when analyzing date fruit samples. Thus, the composition of the invention allows for reliable results when monitoring the quality of food and the environment, such as when analyzing food safety. A further advantage of the composition of the invention is that the concentration of the elements are in a considerable amount that allow to detect the elements in all common measurement techniques. The method of the invention has the advantage that it allows to produce a highly standardized date fruit composition.

Particularly, the method of the invention allows to produce a date fruit composition comprising defined amounts of Na, Mg, P, K, Ca, Cr, Mn, Fe, Cu, and Zn.

The term "composition comprising a date fruit or component(s) thereof", as used herein, relates to a composition comprising at least components of a date fruit, such as major, minor, and/or trace elements of a date fruit. In one embodiment, the components are derived from a date fruit, i.e. the composition is prepared using date fruits. In one embodiment, the date fruit components present in a composition of the invention derive from date fruits used to prepare the composition. In one embodiment, the composition of the invention is prepared using a method of the invention. In one embodiment, the composition of the invention comprises or consists of date fruits or components derived from date fruits. In one embodiment, the terms "composition comprising a date fruit or component(s) thereof' and "date fruit composition" are used interchangeably. In one embodiment, when referring to a "CRM", a composition of the invention is meant. In one embodiment, the term "derived from date fruits" in the context of components present in a composition means that the components are of natural origin, namely being obtained from date fruits, e.g. using a method of the invention, or of synthetic origin, preferably of natural origin. In one embodiment, the position of the invention complies with ISO 34 guidelines.

In one embodiment, said components comprise Na, Mg, P, K, Ca, Cr, Mn, Fe, Cu, and Zn; for example,
Na in an amount of from 20 µg/g to 90 µg/g, preferably 30 µg/g to 80 µg/g, e.g. about 35 µg/g to about 75 µg/g such as about 36.75 µg/g to about 73 µg/g;
Mg in an amount of from 500 µg/g to 800 µg/g, preferably 520 µg/g to 765 µg/g, e.g. about 550 µg/g to about 740 µg/g;
P in an amount of from 400 µg/g to 850 µg/g, preferably 450 µg/g to 800 µg/g, e.g. about 490 µg/g to about 755 µg/g such as about 492 µg/g to about 755 µg/g;
K in an amount of from 5000 µg/g to 8500 µg/g, preferably 6200 µg/g to 7900 µg/g, e.g. about 6400 µg/g to about 7650 µg/g such as about 6410 µg/g to about 7620 µg/g;
Ca in an amount of from 500 µg/g to 900 µg/g, preferably 580 µg/g to 820 µg/g, e.g. about 600 µg/g to about 800 µg/g;
Cr in an amount of from 0.3 µg/g to 1.2 µg/g, preferably 0.45 µg/g to 1.15 µg/g, e.g. about 0.55 µg/g to about 0.98 µg/g such as about 0.575 µg/g to about 0.960 µg/g;
Mn in an amount of from 3 µg/g to 7.5 µg/g, preferably 3.5 µg/g to 6.6 µg/g, e.g. about 3.6 µg/g to about 6.5 µg/g;
Fe in an amount of from 20 µg/g to 48 µg/g, preferably 22 µg/g to 46.5 µg/g, e.g. about 23.6 µg/g to about 43.5 µg/g such as about 23.69 µg/g to about 43.44 µg/g;
Cu in an amount of from 2 µg/g to 4 µg/g, preferably 2.5 µg/g to 3.8 µg/g, e.g. about 2.6 µg/g to about 3.65 µg/g such as about 2.65 µg/g to about 3.60 µg/g; and/or Zn in an amount of from 3 µg/g to 10 µg/g, preferably 4.6 µg/g to 9.5 µg/g, e.g. about 5 µg/g to about 8.8 µg/g such as about 5.0 µg/g to about 8.751 µg/g.

In one embodiment, said date fruit is a fruit of a date palm species selected from *Phoenix dactylifera, Phoenix acaulis, Phoenix atlantica, Phoenix caespitosa, Phoenix canariensis, Phoenix loureiroi, Phoenix paludosa, Phoenix pusilla, Phoenix reclinata, Phoenix roebelenii, Phoenix rupicola, Phoenix sylvestris, Phoenix theophrasti;* preferably *Phoenix dactylifera;* more preferably *Phoenix dactylifera* L. In one embodiment, said date fruit is a fruit of a date palm variety selected from *Kholas, Ajwah, Al-Khunaizi, Amir Hajj, Bouffegous, Dabbas, Datça, Dayri, Empress, Fardh, Ftimi, Holwah, Haleema, Hayany, Iteema, Kenta, Khadrawi, Khastawi, Khenaizi, Lulu, Medjool, Mishriq, Mazafati, Nabtat-seyf, Piarom, Safawi, Sag'ai, Saidy, Sayer, Safrir, Sukkary, Sellaj, Indi, Tagyat, Tamej, Thoory, Umeljwary, Umelkhashab, Zahidi,* and *Zaghloul;* preferably *Kholas.* In one embodiment, said date fruit has a maturity stage selected from kimri, khalal, rotab, and tamar, preferably selected from rotab and tamar; for example, a date fruit used to prepare a composition of the invention, e.g. a date fruit provided in step a) of the method of the invention, has a maturity stage selected from kimri, khalal, rotab, and tamar, preferably selected from rotab and tamar. In one embodiment, a composition, particularly CRM, produced using a date fruit of any variety/cultivar is used for analyzing a fruit of any other date fruit variety/cultivar, and/or is used for analyzing a fruit having a similar composition, such as a similar composition with respect to a richness in carbohydrates (e.g. glucose, fructose, sucrose), vitamins, fibers, and/or minerals (e.g. elements).

The terms "kimri", "khalal", "rotab", and "tamar" relate to ripening stages of date fruits known to a person skilled in the art. In particular, the ripening process of the date includes four principle stages, namely; kimri (immature), khalal (changing color, not mature), rotab (mature) and tamar (ripe) stages. In one embodiment, the terms "ripening stage" and "maturity stage" are used interchangeably. In one embodiment, a kimri stage is an immature stage of a date. In one embodiment, a khalal stage is an immature stage of a date, e.g. a stage in which the date is not mature but has changed its color. In one embodiment, a rotab stage is a mature stage of a date. In one embodiment, a tamar stage is a ripe stage of a date. In one embodiment, the date fruit or date fruit components comprised in a composition of the invention are of a maturity stage selected from an immature stage, a mature stage, a ripe stage, and combinations thereof. The current CRM is appropriate for the analysis of all stages of date fruit, besides all kinds of fruit having similar chemical composition (e.g. richness in carbohydrates (such as glucose, fructose, and sucrose), vitamins, fibers, and minerals (elements)).

In one embodiment, the term "homogenized, irradiated composition", as used herein, relates to a composition that has been subjected to homogenization and irradiation. In one embodiment, said composition is a homogeneous composition. In one embodiment, said composition comprises or consists of particles having a particle size < 850 µm. in one embodiment, the homogenized, irradiated composition of the invention is a homogeneous composition.

In one embodiment, the term "homogenized", as used herein in the context of a composition or mixture, relates to the composition or mixture having been subjected to homogenization, e.g. using a grinder, food processor, mixer, laboratory homogenizer, mill e.g. cryogenic mill, blender, or any combination thereof. Typically, homogenization performs multiple functions such as reduction of particle size and mixing. In one embodiment, a homogenized composition is a homogeneous composition. In one embodiment, a homogenized composition is a composition comprising or consisting of particles having a particle size < 850 µm. In one embodiment, said homogenizing said date fruit to obtain a homogenized mixture in steps c) of a method of the invention comprises homogenizing the date fruit using a grinder, food processor, mixer, laboratory homogenizer, mill e.g. cryogenic mill, blender, or any combination thereof, preferably using a grinder. In one embodiment, said homogenizing said irradiated mixture of step d) in step e) of a method of the invention comprises homogenizing the irradiated mixture using a grinder, food processor, mixer, laboratory homogenizer, mill e.g. cryogenic mill, blender, or any combination thereof, preferably using a grinder. In one embodiment, the internal perimeter and/or the blades of the grinder, food processor, mixer, laboratory homogenizer, mill e.g. cryogenic mill, and/or blender are coated with cover, such as a polyethylene cover. In one embodiment, the method of the invention comprises a step of sieving said homogenized mixture obtained in step c), a step of sieving said irradiated mixture obtained in step d), and/or a step of sieving said homogenized, irradiated composition obtained in step f), preferably to remove particles having a particle size < 850 µm. In one embodiment, a homogeneous composition is a composition in which the components, such as Na, Mg, P, K, Ca, Cr, Mn, Fe, Cu, and Zn, are evenly distributed, preferably comprising or consisting of particles having a particle size < 850 µm. In one embodiment, particle size is measured using scanning electron microscopy (SEM), transmission electron microscopy (TEM), X-ray diffraction spectroscopy, laser diffraction particle size analysis, static image analysis, dynamic image analysis, sieve analysis, and/or dynamic light scattering.

The term "irradiated", as used herein in the context of a composition or mixture, relates to the composition or mixture having been subjected to irradiation, preferably with ionizing irradiation, more preferably gamma ray irradiation, x-ray irradiation, and/or electron beam irradiation. In one embodiment, an irradiated composition and/or irradiated mixture has been subjected to an ionizing radiation dose in the range of from 1 kGy to 100 kGy, preferably 5 kGy to 50 kg, more preferably 10 kGy to 40 kGy, even more preferably 15 kGy to 35 kGy, e.g. about 25 kGy. In one embodiment, said irradiating said homogenized mixture to obtain an irradiated mixture in step d) of a method of the invention comprises subj ecting said homogenized mixture to gamma ray irradiation, x-ray irradiation, and/or electron beam irradiation, preferably to an ionizing radiation dose in the range of from 1 kGy to 100 kGy, preferably 5 kGy to 50 kg, more preferably 10 kGy to 40 kGy, even more preferably 15 kGy to 35 kGy, e.g. about 25 kGy. In one embodiment, said irradiated does not relate to an irradiation with sunlight. In one embodiment, irradiation is performed using a gamma ray source, such as a Co⁶⁰ facility, e.g. Nordion Gamma Cell 220 from Nordion, Canada Ltd. In one embodiment, irradiation is performed at room temperature. In one embodiment, irradiation comprises applying a dose rate in the range of from 1 kGy/hr to 10 kGy/hr, preferably 3 kGy/hr to 5 kGy/hr, e.g. about 4.1 kGy/hr.

The term "ionizing irradiation", as used herein, relates to an irradiation with ionizing radiation, preferably comprising subatomic particles or electromagnetic waves that have sufficient energy to ionize atoms or molecules by detaching electrons from them such as gamma rays, X-rays, and the higher energy ultraviolet part of the electromagnetic spectrum. In one embodiment, ionizing radiation has an energy between 10 electronvolts (eV) and 33 eV. In one embodiment, ionizing irradiation is selected from gamma ray irradiation, x-ray irradiation, electron beam irradiation, and combinations thereof, preferably gamma ray irradiation. In one embodiment, ionizing radiation is selected from gamma ray radiation, x-ray radiation, electron beam radiation, and combinations thereof, preferably gamma ray irradiation. In one embodiment, said ionizing irradiation does not comprise an irradiation with sunlight.

In one embodiment, the term "µg/g", as used herein, relates to a mass fraction of a substance, such as a date fruit component e.g. a minor or trace element, in µg of the substance, to a mass of the total composition, e.g. the composition comprising a date or component thereof of the invention, in gram; such as mass fractions of Na, Mg, P, K, Ca, Cr, Mn, Fe, Cu, and/or Zn. In one embodiment, the mass fraction relates to µg of a component of the composition, e.g. an element, to g of the composition, preferably on a dry mass basis. In one embodiment, mass fractions, such as of Na, Mg, P, K, Ca, Cr, Mn, Fe, Cu, and/or Zn, are determined using any technique known to a person skilled in the art, e.g. ICP, ICP-MS, AAS, INAA, XRF, AES, AFE, PIXE, PIXE-RBS, and IC, preferably ICP such as ICP-MS.

In one embodiment, the composition of the invention comprises
Na in an amount of from 20 µg/g to 90 µg/g of the composition, preferably 30 µg/g to 80 µg/g, e.g. about 35 µg/g to about 75 µg/g such as about 36.75 µg/g to about 73 µg/g;
Mg in an amount of from 500 µg/g to 800 µg/g of the composition, preferably 520 µg/g to 765 µg/g, e.g. about 550 µg/g to about 740 µg/g;
P in an amount of from 400 µg/g to 850 µg/g of the composition, preferably 450 µg/g to 800 µg/g, e.g. about 490 µg/g to about 755 µg/g such as about 492 µg/g to about 755 µg/g;
K in an amount of from 5000 µg/g to 8500 µg/g of the composition, preferably 6200 µg/g to 7900 µg/g, e.g. about 6400 µg/g to about 7650 µg/g such as about 6410 µg/g to about 7620 µg/g;
Ca in an amount of from 500 µg/g to 900 µg/g of the composition, preferably 580 µg/g to 820 µg/g, e.g. about 600 µg/g to about 800 µg/g;
Cr in an amount of from 0.3 µg/g to 1.2 µg/g of the composition, preferably 0.45 µg/g to 1.15 µg/g, e.g. about 0.55 µg/g to about 0.98 µg/g such as about 0.575 µg/g to about 0.960 µg/g; Mn in an amount of from 3 µg/g to 7.5 µg/g of the composition, preferably 3.5 µg/g to 6.6 µg/g, e.g. about 3.6 µg/g to about 6.5 µg/g;
Fe in an amount of from 20 µg/g to 48 µg/g of the composition, preferably 22 µg/g to 46.5 µg/g, e.g. about 23.6 µg/g to about 43.5 µg/g such as about 23.69 µg/g to about 43.44 µg/g; Cu in an amount of from 2 µg/g to 4 µg/g of the composition, preferably 2.5 µg/g to 3.8 µg/g, e.g. about 2.6 µg/g to about 3.65 µg/g such as about 2.65 µg/g to about 3.60 µg/g; and/or Zn in an amount of from 3 µg/g to 10 µg/g of the composition, preferably 4.6 µg/g to 9.5 µg/g, e.g. about 5 µg/g to about 8.8 µg/g such as about 5.0 µg/g to about 8.751 µg/g.

In a preferred embodiment, the composition of the invention comprises or consists of Na in an amount of from 36.75 µg/g to 73 µg/g of the composition, e.g. about 46.58 µg/g; Mg in an amount of from 550 µg/g to 740 µg/g of the composition, e.g. about 636.5 µg/g;
P in an amount of from 492 µg/g to 755 µg/g of the composition, e.g. about 629.4 µg/g;
K in an amount of from 6410 µg/g to 7620 µg/g of the composition, e.g. about 7143.8 µg/g; Ca in an amount of from 600 µg/g to 800 µg/g of the composition, e.g. about 714.1 µg/g;
Cr in an amount of from 0.575 µg/g to 0.960 µg/g of the composition, e.g. about 0.815 µg/g; Mn in an amount of from 3.6 µg/g to 6.5 µg/g of the composition, e.g. about 5.351 µg/g;
Fe in an amount of from 23.69 µg/g to 43.44 µg/g of the composition, e.g. about 31.67 µg/g; Cu in an amount of from 2.65 µg/g to 3.60 µg/g of the composition, e.g. about 3.082 µg/g; and/or
Zn in an amount of from 5.0 µg/g to 8.751 µg/g of the composition, e.g. about 6.619 µg/g.

The term "reference material", as used herein, relates to a standard material having a defined property, e.g. a defined composition such as a defined concentration of Na, Mg, P, K, Ca, Cr, Mn, Fe, Cu, and/or Zn. In one embodiment, a reference material is a material for use as a calibrator in an assay. In one embodiment, a reference material is a material homogeneous and stable with respect to one or more specified properties. A reference material can be used for various applications, e.g. to check the quality and metrological traceability of products, to validate analytical measurement methods, for the calibration of instruments, and for analyzing food quality and/or environmental pollution. In one embodiment, the terms "reference material" and "standard reference material" are used interchangeably. In one embodiment, a reference material reflects the elemental composition of a date fruit. In one embodiment, the composition of the invention is for use as a reference material, e.g. as certified reference material, for date fruit analysis, such as quality control e.g. date fruit quality control and/or date food product quality control, and/or analysis of environmental pollution. In one embodiment, the composition of the invention is a reference material such as a matrix reference material characterized for the composition of specified major, minor and/or trace chemical constituents. In one embodiment, the composition of the invention is a date fruit composition chemically characterized for one or more components such as elements with a known uncertainty.

The term "certified reference material", as used herein, relates to a reference material characterized by one or more specified properties, e.g. a defined composition such as a defined concentration of Na, Mg, P, K, Ca, Cr, Mn, Fe, Cu, and/or Zn; preferably accompanied by a certificate that provides the value of the specified property, its associated uncertainty, and optionally a statement of metrological traceability. In one embodiment, the composition of the invention is a reference material, preferably a certified reference material, for date fruit elemental composition, e.g. having defined concentrations of Na, Mg, P, K, Ca, Cr, Mn, Fe, Cu, and/or Zn. In one embodiment, the reference material, preferably certified reference material, is used for analyzing food quality and/or environmental pollution. In one embodiment, the composition of the invention is used as reference material, preferably certified reference material, e.g. for analyzing food quality and/or environmental pollution. In one embodiment, the certified values of the certified reference material are
Na in an amount of from 36.75 µg/g to 73 µg/g,
Mg in an amount of from 550 µg/g to 740 µg/g;
P in an amount of from 492 µg/g to 755 µg/g;
K in an amount of from 6410 µg/g to 7620 µg/g;
Ca in an amount of from 600 µg/g to 800 µg/g;
Cr in an amount of from 0.575 µg/g to 0.960 µg/g;
Mn in an amount of from 3.6 µg/g to 6.5 µg/g;
Fe in an amount of from 23.69 µg/g to 43.44 µg/g;
Cu in an amount of from 2.65 µg/g to 3.60 µg/g; and/or
Zn in an amount of from 5.0 µg/g to 8.751 µg/g.

In one embodiment, the composition of the invention is provided in the form of a kit and/or is accompanied by a certificate that specifies the certified values as defined above. In one embodiment, said kit comprises a certificate specifying the certified values as defined above. In one embodiment, said use of a composition, as defined herein, as a reference material comprises one or more of the following applications:
- an accreditation process for a laboratory,
- instrument calibration,
- testing validity of tools, e.g. tools used in chemical analysis,
- validation of an analytical method,
- examination of a method, e.g. examination of an infrequently used method,
- troubleshooting, e.g. in chemical analysis,
- verification, e.g. verification of a correct use of an analytical method. For example, the certified reference material of the invention can be used by industry (for example used in quality control laboratories), researchers and academicians (for example applied at research centers, universities, etc.), practitioners (for example used in municipality laboratories, environmental monitoring labs, etc.), students (for example in higher education institutions), and/or trainees (for example various public and private centers). In one embodiment, the use of the composition of the invention as a reference material involves an elemental analytical method of the relevant matrix and/or testing homogeneity method(s). In one embodiment, the use of the invention, particularly analyzing food quality and/or environmental pollution using a composition of the invention as a reference material, comprises using the composition for any of
- an accreditation process for a laboratory,
- instrument calibration,
- testing validity of tools, e.g. tools used in chemical analysis,
- validation of an analytical method,
- examination of a method, e.g. examination of an infrequently used method,
- troubleshooting, e.g. in chemical analysis,
- verification, e.g. verification of a correct use of an analytical method.

The terms "nitrogen, oxygen, and silicon in a ratio" and "nitrogen : oxygen : silicon ratio" , as used herein, relate to a ratio of the elements nitrogen, oxygen, and silicon in a composition of the invention. For example, such ratio describes the relative amounts of nitrogen, oxygen, and silicon in the composition. In one embodiment, the ratio of nitrogen, oxygen, and silicon is 6-9 : 80-85 : 4-7, i.e. relative to each other there are 6-9 parts of nitrogen, 80-85 parts of oxygen, and 4-7 parts of silicon. In one embodiment, the ratio of nitrogen, oxygen, and silicon is 7-8 : 82-83 : 5-6, i.e. relative to each other there are 7-8 parts of nitrogen, 82-83 parts of oxygen, and 5-6 parts of silicon. In one embodiment, the ratio of nitrogen, oxygen, and silicon is 7.7 : 82.1: 5.8, i.e. relative to each other there are 7.7 parts of nitrogen, 82.1 parts of oxygen, and 5.8 parts of silicon. In one embodiment, the amounts of nitrogen, oxygen, and silicon are determined using energy-dispersive X-ray spectroscopy (EDX). In one embodiment, the composition of the invention has a nitrogen : oxygen : silicon ratio as defined above.

The term "drying said date fruit", as used herein, relates to drying date fruit(s) using any method known to person of skill in the art, such as freeze drying, heat drying, or vacuum drying. In one embodiment, drying date fruit comprises heat drying said date fruit in an oven at a temperature of from 40°C to 90°C, e.g. about 70°C, such as for 1 min to 72 hours, e.g. 20 hours. In one embodiment, drying date fruit comprises drying until a water content of 0-25 wt%, e.g. 10-25 wt% is achieved. In one embodiment, step b) of a method of the invention, if present, comprises drying date fruit(s) to obtain dried date fruit(s), wherein said dried date fruit(s) preferably have a water content < 25 wt%. In one embodiment, the use of a composition according to the invention comprises drying said composition prior to further use, e.g. prior to using the composition as reference material for analyzing food quality and/or environmental pollution. In one embodiment, the kit of the invention comprises instructions to dry the composition, preferably reference material, prior to using the composition.

In one embodiment, homogeneity of a composition, e.g. of a homogenized composition, is determined using any of SEM, EDX, XRD, FTIR, PIXE, RBS, INAA, ICP, XRF, and combinations thereof. In one embodiment, a composition is analyzed using ICP-OES.

The terms "of the [present] invention", "in accordance with the invention", "according to the invention" and the like, as used herein are intended to refer to all aspects and embodiments of the invention described and/or claimed herein.

As used herein, the term "comprising" is to be construed as encompassing both "including" and "consisting of", both meanings being specifically intended, and hence individually disclosed embodiments in accordance with the present invention. Where used herein, "and/or" is to be taken as specific disclosure of each of the two specified features or components with or without the other. For example, "A and/or B" is to be taken as specific disclosure of each of (i) A, (ii) B and (iii) A and B, just as if each is set out individually herein. In the context of the present invention, the terms "about" and "approximately" denote an interval of accuracy that the person skilled in the art will understand to still ensure the technical effect of the feature in question. The term typically indicates deviation from the indicated numerical value by ±20%, ±15%, ±10%, and for example ±5%. As will be appreciated by the person of ordinary skill, the specific such deviation for a numerical value for a given technical effect will depend on the nature of the technical effect. For example, a natural or biological technical effect may generally have a larger such deviation than one for a man-made or engineering technical effect. Where an indefinite or definite article is used when referring to a singular noun, e.g. "a", "an" or "the", this includes a plural of that noun unless something else is specifically stated.

### List of abbreviations

AAS: Atomic absorption spectrometry
EDX: Energy dispersive X-ray spectroscopy
ICP-OES: Inductively coupled plasma-optical emission spectrometry
ICP-SFMS: Inductively coupled plasma-sector field mass spectrometry
INAA: Instrumental neutron activation analysis (INAA)
PIXE: particle-induced X-ray emission
RBS: Rutherford backscattering spectrometry
SEM: Scanning electron microscopy (SEM)
XRD: X-ray diffraction
XRF: X-ray fluorescence spectrometry

### BRIEF DESCRIPTION OF THE FIGURES

The present invention is now further described by reference to the following figures.

All methods mentioned in the figure descriptions below were carried out as described in detail in the examples.

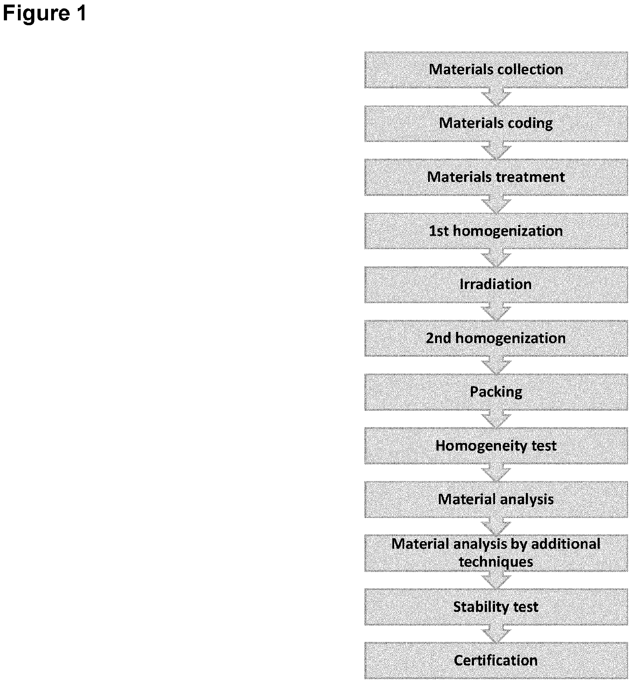

**Figure 1** shows the process of certified reference material development. A standardized date fruit elemental composition was successfully developed.

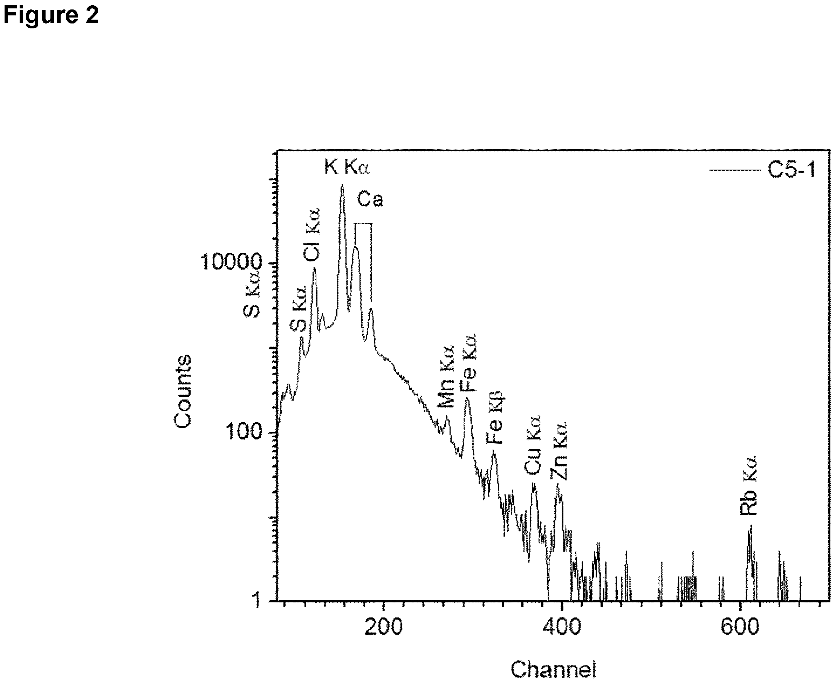

**Figure 2** shows a representative PIXE spectrum of dates fruits (Phoenix dactylifera L). Particularly, a representative spectrum of the CRM of date fruit is shown for an elemental analysis obtained by a combination of particle-induced X-ray emission with Rutherford backscattering spectrometry techniques (PIXE-RBS). The combination was exploited for testing the homogeneity of the CRM benefiting the advantages of the techniques in terms of non-destruction, simultaneous quantification of a wide range of elements, sensitive detection of various elements ranging from sodium to uranium. The analysis shows that the contents of the quantified elements were in the following descending order: potassium > silicon > chloride > calcium > sulfur > iron > zinc. The relative error values of all elements were <10%, with the exception of silicon and zinc. The homogeneity of the date fruit CRM is acceptable since sulfur, chloride and potassium recorded relative average deviation < 10%.

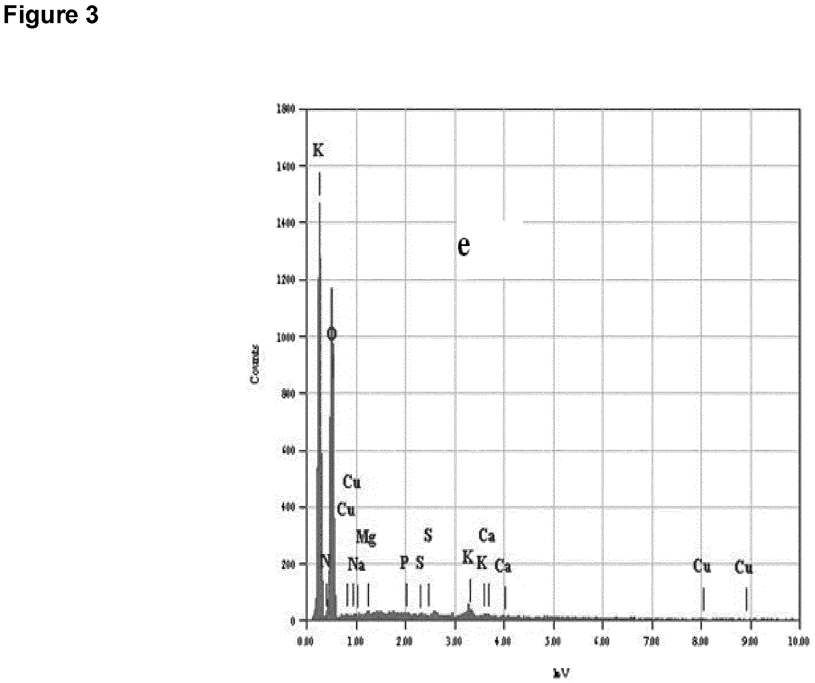

**Figure 3** shows an EDX spectra of date fruit. Particularly, a representative spectrum of the CRM of date fruit is shown for the analysis of major elements obtained by energy dispersive X-ray spectroscopy (EDX). This technique was exploited for testing the homogeneity of the CRM benefiting the advantages of the techniques in terms of non-destruction and simultaneous quantification of a wide range of elements. The analysis shows that the average relative contents (%) of nitrogen, oxygen, and potassium are 7.69%, 82.14, and 5.84, respectively. The standard deviation values of the analysis of seven CRM are as follows: nitrogen 2.11, oxygen 3.00, and potassium 0.64. These results confirm that the homogeneity of the date fruit CRM is acceptable.

In the following, reference is made to the examples, which are given to illustrate, not to limit the present invention.

### EXAMPLES

### Example 1: Material collection and preparation

A bulk of date fruit material was collected from Al-Ahssa Province, Eastern Region, Saudi Arabia. To maintain the homogeneity of dates fruit, the material was collected from one farm. The variety of the dates fruit is "Kholas". The material was collected in the stage of "Tamor", i.e., after conversion from "Rotab" stage. The kernels were removed. The dates fruit were kept in polyethylene bags and transferred to laboratory at the Department of Chemistry, College of Science, Abha. The material was dried for 20 hours using a freeze dryer and kept in a freezer at -30 °C for further process. The dates fruit were then ground and sieved to particle-size less than 850 µm. Thereafter, the powder was homogenized for 12 h and irradiated with a dose rate of 4.1 kGy/hr and at 25 kGy of absorbed dose (1 Gy = 100 rad = 1 Joule/kg). The material was homogenized after irradiation for further 12 h.

### Example 2: Irradiation

The process of irradiation was completed for the materials to be certified. The quantities of reference materials to be certified were in the average of 5 kg. The container of gamma ray irradiation had a volume of 1 L. Hence, the total quantity of each material was divided into 5-8 parts, based on the density of material. The material of date was irradiated in six steps. All irradiations of samples were carried out using Co⁶⁰ facility, Nordion Gamma Cell 220 from Nordion, Canada Ltd. The dose rate for each sample was 4.1 kGy/hr and at 25 kGy of absorbed dose (1 Gy = 100 rad = 1 Joule.kg⁻¹). The irradiation treatment was performed in vessels of Pyrex-glass at free room temperature. Advantageously, by irradiating the reference materials, the reference materials have a long shelf-life.

### Example 3: Second homogenization

After irradiation phase, CRMs were discharged from their packing in a large light protected polypropylene container and stored at room temperature. Each CRM was then subjected to homogeneity process. Homogenization was repeated to maintain the highest degree of homogeneity before final packing in bottles. After the second homogenization step, CRMs were packed in their final forms. Light protected brown bottles were used for packing. 25 g were packed in 250 mL bottles.

### Example 4: Material analysis

Homogeneity tests were performed using 1) PIXE and RBS techniques, 2) SEM, EDX and XRD, and 3) WDXRF. The analyses showed that the composition of the invention is homogenous.

### Digestion procedures of CRMs

Microwave digestion system was used to accelerate the digestion analysis.

For CRM of date fruits, 1.0 g was accurately weighed and transferred in a porcelain crucible. The sample was ashed at muffle furnace at 550°C and for 24 h. The ashed material was allowed to cool at room temperature and then moistened with few drops of deionized distilled water. 3 mL of concentrated hydrochloric acid were added to the sample with stirring at about 60°C until semi dryness. The process took about 30 min. The residue was then dissolved in 5 mL of 2 mol/L nitric acid. Thereafter, the sample was filtered through Whatman^{®} filter number 42. A blank sample was prepared in parallel using the same procedure.

### Analysis using ICP-OES instrument

A new ICP-OES instrument was validated and calibrated. Various conditions, such as axial and radial modes and wavelength, were tested for each element. In addition, a long series of standard solutions were examined.

**Table 1: Elements concentrations in date fruit composition obtained from a newly developed home method using ICP-OES (M1: Measurement 1, M2: Measurement 2, M3: Measurement 3)**

| **Element** | **M1** | **M2** | **M3** | **Mean** |
|---|---|---|---|---|
| Cr | 0.996 | 0.910 | 0.972 | 0.960 |
| Mn | 5.354 | 5.348 | 5.226 | 5.309 |
| Fe | 34.612 | 31.634 | 45.455 | 37.233 |
| Co | 0.000 | 0.000 | 0.000 | 0.000 |
| Cu | 2.864 | 2.731 | 2.674 | 2.756 |
| Zn | 8.466 | 8.307 | 9.480 | 8.751 |
| Al | 18.800 | 16.841 | 23.578 | 19.740 |
| Pb | 0.623 | 0.455 | 0.608 | 0.562 |
| Na | 59.512 | 62.472 | 59.431 | 60.472 |
| Mg | 566.360 | 576.354 | 556.636 | 566.450 |
| Cd | 0.249 | 0.228 | 0.243 | 0.240 |
| Ni | 1.619 | 2.276 | 1.945 | 1.946 |
| Ca | 617.779 | 626.309 | 623.481 | 622.523 |

### Example 5: Material analysis by additional techniques

A wide range of analytical techniques including ICP-OES, ICP-MS, FAAS, ETAAS, INAA, XRF, XRD, RBS and PIXE were performed.

### Homogeneity test using PIXE and RBS

PIXE and RBS were performed to analyze the homogeneity of a composition of the invention. It was found that the composition is a homogeneous composition.

**Table 2: Descriptive statistics of between-homogeneity test of the elements contents in a CRM of date fruit measured by PIXE and RBS.**

| **Element** | **AC** | **RER%** | **RSD%** | **RAV%** |
|---|---|---|---|---|
| Si | 3040.3 | 16.9-31.3 | 33.7 | 22.2 |
| S | 334.9 | 5.9-7.2 | 14.8 | 10.9 |
| Cl | 1262.9 | 1.9-3.0 | 12.5 | 9.8 |
| K | 5592.9 | 0.7-2.2 | 9.7 | 7.9 |
| Ca | 727.3 | 1.6-2.6 | 22.8 | 15.3 |
| Fe | 66.1 | 2.7-8.0 | 82.2 | 52.1 |
| Zn | 9.1 | 10.0-25.0 | 34.8 | 24.1 |

### Homogeneity test using SEM, EDX and XRD

SEM, EDX and XRD were performed to analyze the homogeneity of a composition of the invention. SEM, EDX (Table 3 and Figure 3) and XRD showed that the composition is a homogeneous composition.

**Table 3: Descriptive statistics of element composition (%) of certified reference materials obtained by EDX measurements**

| **CRM** | **Element** | | |
|---|---|---|---|
| **date fruit** | **N** | **O** | **K** |
| Mean | 7.69 | 82.14 | 5.84 |
| SD | 2.11 | 3.00 | 0.64 |
| RSD (%) | 27.46 | 3.66 | 11.01 |
| MD | 1.66 | 2.42 | 0.53 |

### Homogeneity test using WDXRF

The CRM was analyzed using WDXRF. The results are shown in table 4.

**Table 4: Descriptive statistics of elements contents (weight %) in date fruit CRM**

| **Element** | **Average** | **RSD %^{a}** | **RAD%^{b}** | **Skewness** | **Kurtosis** |
|---|---|---|---|---|---|
| Al | 0.0048 | 19.09 | 15.95 | -1.23 | -0.82 |
| Ca | 0.5953 | 0.08 | 0.07 | 1.23 | -0.84 |
| Cl | 0.4019 | 2.42 | 2.03 | -0.46 | -1.68 |
| Cu | 0.0141 | 2.59 | 2.06 | 0.12 | -1.16 |
| Fe | 0.0489 | 23.01 | 18.22 | -0.96 | -0.57 |
| K | 2.5771 | 2.13 | 1.76 | 0.66 | -1.30 |
| Mg | 0.0567 | 1.36 | 1.12 | -0.25 | -1.28 |
| P | 0.0815 | 2.09 | 1.76 | 0.07 | -1.91 |
| Rb | 0.0080 | 3.76 | 3.13 | -0.83 | -1.28 |
| S | 0.0809 | 0.21 | 0.17 | -0.62 | -1.40 |
| Si | 0.0454 | 31.89 | 20.55 | 2.58 | 6.75 |
| Sr | 0.0091 | 11.60 | 9.27 | 0.21 | -1.03 |
| Zn | 0.0068 | 18.66 | 14.71 | 0.33 | -0.74 |

| | | | | | |
|---|---|---|---|---|---|
| a relative standard deviation; b relative average deviation | | | | | |

### CRMs analysis by ICP-MS

The CRM was analyzed using ICP-MS. The results are shown in table 5.

**Table 5: Elements concentrations and limits of detection (LODs) (µg/g) in date fruit composition obtained by ICP-MS**

| **Element** | **R1** | **R2** | **LOD** |
|---|---|---|---|
| Ca | 820 | 780 | 4 |
| Cd | ND | ND | 0.01 |
| Cr | 0.79 | 0.84 | 0.06 |
| Cu | 2.8 | 2.9 | 0.1 |
| Fe | 32 | 25 | 0.5 |
| Pb | 0.08 | 0.06 | 0.03 |
| Mg | 740 | 740 | 0.6 |
| Mn | 5.8 | 5.7 | 0.02 |
| P | 750 | 760 | 2 |
| K | 7500 | 7600 | 20 |
| Na | 49 | 39 | 10 |
| Zn | 5 | 5 | 0.1 |

### CRMs analysis by INAA

The CRM was analyzed using INAA. The results are shown in table 6.

**Table 6: Elements concentrations (µg/g), RSD (%) and LOD of duplicate independent analysis of date fruit composition obtained by INAA**

| **Element** | **C1** | **RSD** | **C2** | **RSD (%)** | **LOD** |
|---|---|---|---|---|---|
| Cd | <5 | - | <5 | - | 5 |
| Ca | 609 | 13 | 752 | 11 | 100 |
| Cr | <2 | - | <2 | - | 2 |
| Cu | <14 | - | <14 | - | 30 |
| Fe | <200 | - | <200 | - | 200 |
| Mg | 600 | 14 | 737 | 11 | 100 |
| Mn | 6.2 | 8.1 | 5.5 | 8.6 | 1 |
| K | 7430 | 5.1 | 7810 | 4.8 | 50 |
| Na | 43 | 10 | 37 | 10 | 5 |
| Zn | <10 | - | <10 | - | 10 |

### CRMs analysis by PIXE

The CRM was analyzed using PIXE. The results are shown in table 7.

**Table 7: Elements concentrations (µg/g), RSD (%) and LOD of duplicate independent analysis of date fruit composition obtained by PIXE**

| **Element** | **Energy (keV** | **Measurement 1** | | | **Measurement 1** | | |
|---|---|---|---|---|---|---|---|
| | | **LOD** | **C₁** | **Error** | **LOD** | **C2** | **Error** |
| Na | 1.041 | 185.10 | 290 | 110 | 170.10 | 350.0 | 1000 |
| Mg | 1.254 | 68.25 | 840 | 40 | 63.50 | 740.0 | 40 |
| Al | 1.487 | 38.56 | 99 | 22.0 | 35.53 | 87.0 | 20.0 |
| Si | 1.740 | 22.25 | 350 | 10.0 | 20.91 | 330.0 | 10.0 |
| P | 2.010 | 15.35 | 550 | 10.0 | 15.26 | 470.0 | 10.0 |
| S | 2.308 | 11.12 | 520 | 10.0 | 12.22 | 440 | 10.0 |
| Cl | 2.622 | 6.632 | 1620 | 20.0 | 10.83 | 1510 | 20.0 |
| K | 3.314 | 10.08 | 5240 | 50.0 | 16.70 | 5050 | 50.0 |
| Ca | 3.692 | 43.60 | 530 | 30.0 | 43.45 | 520 | 30.0 |
| Mn | 5.899 | 1.527 | 3.1 | 0.9 | 1.577 | 4.1 | 1.0 |
| Fe | 6.405 | 0.925 | 25 | 1.0 | 1.215 | 42 | 2.0 |
| Ni | 7.478 | 0.397 | 0.9 | 0.3 | 0.284 | 1.0 | 0.3 |
| Cu | 8.048 | 0.464 | 2.6 | 0.4 | 0.481 | 3.0 | 0.4 |
| Zn | 8.639 | 0.583 | 3.6 | 0.5 | 0.650 | 3.4 | 0.5 |

### CRMs analysis by INAA

The CRM was analyzed using INAA. The results are shown in table 8.

**Table 8: Duplicate elements concentrations, SD and LOD (µg/g) in date fruit composition obtained by INAA**

| **Element** | **R1** | **R2** | **SE** | **LOD** |
|---|---|---|---|---|
| Na | 37.5 | 36.0 | 2.0 | 0.96 |
| K | 6590 | 6900 | 1.0 | 130 |
| Cr | 0.48 | 0.67 | 8.0 | 0.15 |
| Fe | 30.0 | 26.6 | 5.0 | 7.0 |
| Zn | 5.0 | 4.6 | 4.0 | 0.57 |
| Cd | < LOD | < LOD | - | 0.14 |
| Mg | 660 | 683 | 3.0 | 340 |
| Ca | 760 | 790 | 4.0 | 740 |
| Mn | 5.63 | 5.70 | 2.0 | 0.1 |
| Co | 0.015 | 0.011 | 20.0 | 0.021 |
| Cu | < LOD | 3.6 | - | 8.7 |
| As | 0.017 | 0.036 | 40.0 | 0.023 |

### CRMs analysis by ICP-OES

The CRM was analyzed using ICP-OES. The results are shown in table 9.

**Table 9: Duplicate elements concentrations (µg/g) in date fruit composition obtained by ICP-OES**

| **Element** | **C1** | **C2** | **Element** |
|---|---|---|---|
| Ca | 1290 | 1380 | 63.64 |
| Cr | 45.0 | 5.7 | 27.79 |
| Cu | 2.8 | 2.5 | 0.21 |
| Fe | 44.4 | 28.6 | 11.17 |
| Pb | < 1.0 | < 1.0 | - |
| Mg | 631 | 707 | 53.74 |
| Cd | < 1.0 | < 1.0 | - |
| Mn | 631 | 4.6 | 442.93 |
| P | 646 | 338 | - |
| K | 3090 | 3460 | 261.63 |
| Na | 45.0 | 101.0 | 39.60 |
| Zn | 4.2 | 3.8 | 0.28 |

### CRMs analysis by INAA

The CRM was analyzed using INAA. The results are shown in table 10.

**Table 10: Duplicate elements concentrations (µg/g) in date fruit obtained by INAA**

| **Element** | **C1** | **SD** | **C2** | **SD** |
|---|---|---|---|---|
| Ca | 779 | 32 | 808 | 32 |
| Cr | 0.789 | 0.030 | 0.896 | 0.035 |
| Fe | 26.7 | 1.2 | 31.0 | 1.3 |
| K | 7126 | 250 | 7349 | 257 |
| Na | 37.8 | 1.3 | 41.1 | 1.5 |
| Zn | 5.26 | 0.20 | 5.25 | 0.23 |

### CRMs analysis by INAA

The CRM was analyzed using INAA. The results are shown in table 11.

**Table 11: Duplicate elements concentrations (µg/g) in CRMs of date fruit of date palm obtained by INAA**

| **Element** | **LOD** | **date fruit** | |
|---|---|---|---|
| | | **C1** | **C2** |
| As | 0.5 | - | |
| Co | 1.0 | - | - |
| Cr | 5.0 | < 5 | < 5 |
| Na | 100 | 200 | < 100 |
| Ni | 20.0 | - | - |
| Zn | 50.0 | < 50 | < 50 |
| Fe | 100 | 600 | < 100 |
| Ca | 10000 | < 1 | < 1 |
| Mn | 0.1 | 7 | 5 |
| Al | 1.0 | - | - |
| Mg | 500 | 500 | 600 |

### CRMs analysis by ICP-MS

The CRM was analyzed using ICP-MS. The results are shown in table 12.

**Table 12: Duplicate elements concentrations (µg/g) in CRMs of date fruit obtained by ICP-MS**

| **Element** | **LOD** | **date fruit** | |
|---|---|---|---|
| | | **C1** | **C2** |
| Na | 100 | < 100 | < 100 |
| Mg | 100 | 600 | 700 |
| K | 100 | 6900 | 7700 |
| Ca | 100 | 700 | 800 |
| Cd | 0.1 | < 0.1 | < 0.1 |
| Cr | 0.5 | 0.9 | 1 |
| Mn | 1 | 6 | 7 |
| Fe | 100 | < 100 | < 100 |
| Ni | 0.5 | - | - |
| Zn | 0.2 | 5.1 | 5.5 |
| As | 0.1 | - | - |
| Cu | 0.2 | 3.3 | 3.5 |
| Pb | 0.5 | < 0.5 | < 0.5 |
| P | 10 | 670 | 780 |

### CRMs analysis by AAS

The CRM was analyzed using AAS. The results are shown in table 13.

**Table 13: Elements concentrations (µg/g) in date fruit obtained from triplicate independent analysis by AAS**

| **Elements** | **C1** | **C2** | **C3-** | **Mean** |
|---|---|---|---|---|
| Al | 24638.47 | 25147.93 | 24758.18 | 24848.19 |
| Si | 203546 | 202909.3 | 203132.2 | 203195.8 |
| Cr | 40.61 | 40.43 | 40.3 | 40.44667 |
| Mn | 155.01 | 167.65 | 174.46 | 165.7067 |
| Fe | 6438.19 | 6311.64 | 6379.55 | 6376.46 |
| Ni | 71.32 | 71.5 | 71.4 | 71.40667 |
| Cu | 5.94 | 5.92 | 5.76 | 5.873333 |
| Zn | 25.46 | 25.39 | 25.91 | 25.58667 |
| As | 3.47 | 3.3 | 3.11 | 3.293333 |
| Cd | 3.07 | 2.96 | 2.81 | 2.946667 |
| Pb | 35.66 | 35.99 | 35.7 | 35.78333 |

### CRMs analysis by ICP-MS

The CRM was analyzed using ICP-MS. The results are shown in table 14.

**Table 14: Element concentrations and uncertainty (µg/g) in CRMs of date fruit composition obtained by ICP-MS**

| **Element** | **date fruit** |
|---|---|
| Ca | 717 ± 75 |
| Cd | < 0.017 |
| Cr | 0.75 ± 0.15 |
| Cu | 3.09 ± 0.29 |
| Fe | 25.0 ± 5.5 |
| K | 10600 ± 1300 |
| Mg | 659 ± 143 |
| Mn | 5.45 ± 0.82 |
| Na | < 116 |
| P | 635 ± 42 |
| Pb | 0.110 ± 0.028 |
| Zn | 4.83 ± 0.45 |
| Ni | - |

### CRMs analysis by different techniques

The data obtained from analyses using a broad spectrum of different techniques were compared. The results of the analysis is shown in Table 15.

**Table 15: Element concentrations and mean (µg/g) in date fruit composition obtained by different elemental analysis techniques**

| **Element** | **C1** | **C2** | **C3** | **Mean** |
|---|---|---|---|---|
| Fe | 308.54 | 296.61 | 313.42 | 306.19 |
| Mn | 45.84 | 45.34 | 45.64 | 45.61 |
| Cu | 35 | 36.88 | 39.88 | 37.25 |
| Zn | 56.21 | 57.23 | 56.8 | 56.75 |
| Cd | 9.75 | 15.06 | 13.11 | 12.64 |
| Pb | 213.8 | 229.71 | 218.22 | 220.58 |
| Mg | 961.64 | 960.98 | 959.86 | 960.83 |
| K | 39.59 | 41.63 | 41 | 40.74 |
| Na | 43.24 | 38.82 | 40.17 | 40.74 |
| Ca | 25.28 | 24.48 | 24.7 | 24.82 |

The above analyses show that the date fruit composition is a homogeneous composition comprising a defined amount of elements such as Na, Mg, P, K, Ca, Cr, Mn, Fe, Cu, and Zn. Using a multitude of techniques and tests, it was shown that the date fruit composition is homogenous and comprises Na in an amount of from 36.75 µg/g to 73 µg/g, Mg in an amount of from 550 µg/g to 740 µg/g, P in an amount of from 492 µg/g to 755 µg/g, K in an amount of from 6410 µg/g to 7620 µg/g, Ca in an amount of from 600 µg/g to 800 µg/g, Cr in an amount of from 0.575 µg/g to 0.960 µg/g, Mn in an amount of from 3.6 µg/g to 6.5 µg/g, Fe in an amount of from 23.69 µg/g to 43.44 µg/g, Cu in an amount of from 2.65 µg/g to 3.60 µg/g, and Zn in an amount of from 5.0 µg/g to 8.751 µg/g.

### Example 6: Certified values

The results obtained in the analyses as described above were analyzed for consistency between the measurements. It was demonstrated that the composition of the invention comprises Na, Mg, P, K, Ca, Cr, Mn, Fe, Cu, and Zn in the amounts specified in Table 16.

The certified values are presented for the total element contents, addressed as mass fractions (µg/g), of some macro element (potassium), micro (sodium, magnesium, phosphorus, and calcium) and trace elements (chromium, manganese, iron, copper, and zinc). The certified values are shown in Table 16. The values are based on the agreement of results obtained using various elemental analytical techniques, which are listed in Table 17.

**Table 16: Certified values (µg/g) of elements in CRM:KKU-301**

| **Element** | **Mean** | **Uncertainly** | **Range** |
|---|---|---|---|
| Na | 46.58 | 13.05 | 36.75-73.0 |
| Mg | 636.5 | 60.9 | 550.0-740.0 |
| P | 629.4 | 108.6 | 492.0-755.0 |
| K | 7143.8 | 473.8 | 6410.0-7620.0 |
| Ca | 714.1 | 72.4 | 600.0-800.0 |
| Cr | 0.815 | 0.143 | 0.575-0.960 |
| Mn | 5.351 | 0.752 | 3.600-6.500 |
| Fe | 31.67 | 6.46 | 23-69-43.44 |
| Cu | 3.082 | 0.335 | 2.650-3.600 |
| Zn | 6.619 | 1.682 | 5.000-8.751 |

**Table 17: Elemental analysis of CRM:KKU-301**

| **Abbreviation** | **Technique** |
|---|---|
| ICP-MS | Inductively coupled plasma- mass spectrometry |
| INAA | Instrumental neutron activation analysis |
| PIXE | particle-induced X-ray emission |
| WD-XRF | wavelength-dispersive-X-ray fluorescence spectrometry |
| ICP-OES | Inductively coupled plasma-optical emission spectrometry |
| ICP-SFMS | Inductively coupled plasma-sector field mass spectrometry |
| ko-INAA | ko-based instrumental neutron activation analysis |
| AAS | Atomic absorption spectrometry |
| EDX | Energy dispersive X-ray spectroscopy |
| RBS | Rutherford backscattering spectrometry |
| SEM | Scanning electron microscopy |
| XRD | X-ray diffraction |

Using various techniques, it was shown that the date fruit composition homogenously comprises the elements shown in Table 16 in the specified amounts (see value ranges).

### Example 7: Stability test

The analysis using ICP OES (inductively coupled plasma optical emission spectrometry) and ICP-SFMS (inductively coupled plasma sector field mass spectrometry) showed that the date fruit composition is stable. The CRM is stable for at least five years because of a high radiation dose applied as well as the nature of the certified analytes (inorganics).

**Table 18: Mean of elements concentration (mg/kg) and relative standard deviation (RSD%) of independent duplicate measurements and stability of CRMs of date fruit**

| **CRM** | **Element** | **Ini tial** | | **Final (1 in year after itial)** | |
|---|---|---|---|---|---|
| | | **Mean** | **RSD (%)** | **Mean** | **RSD (%)** |
| date fruit | Ca | 688.26 | 2.0 | 732.5 | 2.4 |
| | Cd | 0.00159 | 18.7 | 0.00135 | 5.2 |
| | Cu | 3.225 | 1.5 | 3.245 | 2.0 |
| | Fe | 23.69 | 2.1 | 25.15 | 0.3 |
| | K | 6410 | 1.1 | 5030 | 1.7 |
| | Mg | 632.995 | 1.0 | 632.5 | 1.7 |
| | Mn | 5.265 | 1.7 | 4.82 | 2.6 |
| | P | 659.605 | 1.0 | 605.5 | 5.0 |
| | Pb | 162.21 | 15.6 | 0.0725 | 2.9 |
| | Zn | 5.635 | 3.1 | 5.86 | 1.4 |

### Example 8: Homogeneity of element content in the CRM of date fruit

Instrumentation Neutron Activation Analysis was performed to assess between-bottle homogeneity of element content in the date fruit composition. The analysis showed a low standard deviation between the bottles. The composition is thus a homogeneous composition.

**Table 19. Between-bottle homogeneity of element content in the CRM of date fruit measured by Instrumentation Neutron Activation Analysis (INAA)**

| **Element** | **RSD%^{a}** |
|---|---|
| Na | 2.85 |
| K | 3.01 |
| Cr | 17.52 |
| Fe | 6.87 |
| Zn | 7.95 |
| Mg | 3.20 |
| Ca | 2.48 |
| Mn | 0.86 |
| Cu | 3.82 |

| | |
|---|---|
| a Relative standard deviation | |

The features of the present invention disclosed in the specification, the claims, and/or in the accompanying figures may, both separately and in any combination thereof, be material for realizing the invention in various forms thereof.

## Claims

1. A composition comprising a date fruit or component(s) thereof, wherein said composition is a homogenized, irradiated composition.

2. The composition according to claim 1, wherein said composition is a powder, granules, pulp, paste, dispersion, or suspension, preferably a powder.

3. The composition according to claim 1 or 2, wherein said composition is a composition irradiated with ionizing irradiation, preferably gamma ray irradiation, x-ray irradiation, and/or electron beam irradiation.

4. The composition according to any one of the foregoing claims, wherein said composition comprises
Na in an amount of from 20 µg/g to 90 µg/g, preferably 30 µg/g to 80 µg/g, e.g. about 35 µg/g to about 75 µg/g;
Mg in an amount of from 500 µg/g to 800 µg/g, preferably 520 µg/g to 765 µg/g, e.g. about 550 µg/g to about 740 µg/g;
P in an amount of from 400 µg/g to 850 µg/g, preferably 450 µg/g to 800 µg/g, e.g. about 490 µg/g to about 755 µg/g;
K in an amount of from 5000 µg/g to 8500 µg/g, preferably 6200 µg/g to 7900 µg/g, e.g. about 6400 µg/g to about 7650 µg/g;
Ca in an amount of from 500 µg/g to 900 µg/g, preferably 580 µg/g to 820 µg/g, e.g. about 600 µg/g to about 800 µg/g;
Cr in an amount of from 0.3 µg/g to 1.2 µg/g, preferably 0.45 µg/g to 1.15 µg/g, e.g. about 0.55 µg/g to about 0.98 µg/g;
Mn in an amount of from 3 µg/g to 7.5 µg/g, preferably 3.5 µg/g to 6.6 µg/g, e.g. about 3.6 µg/g to about 6.5 µg/g;
Fe in an amount of from 20 µg/g to 48 µg/g, preferably 22 µg/g to 46.5 µg/g, e.g. about 23.6 µg/g to about 43.5 µg/g;
Cu in an amount of from 2 µg/g to 4 µg/g, preferably 2.5 µg/g to 3.8 µg/g, e.g. about 2.6 µg/g to about 3.65 µg/g; and/or
Zn in an amount of from 3 µg/g to 10 µg/g, preferably 4.6 µg/g to 9.5 µg/g, e.g. about 5 µg/g to about 8.8 µg/g.

5. The composition according to any one of the foregoing claims, wherein said composition comprises
Na in an amount of from 36.75 µg/g to 73 µg/g;
Mg in an amount of from 550 µg/g to 740 µg/g;
P in an amount of from 492 µg/g to 755 µg/g;
K in an amount of from 6410 µg/g to 7620 µg/g;
Ca in an amount of from 600 µg/g to 800 µg/g;
Cr in an amount of from 0.575 µg/g to 0.960 µg/g;
Mn in an amount of from 3.6 µg/g to 6.5 µg/g;
Fe in an amount of from 23.69 µg/g to 43.44 µg/g;
Cu in an amount of from 2.65 µg/g to 3.60 µg/g; and/or
Zn in an amount of from 5.0 µg/g to 8.751 µg/g.

6. The composition according to any one of the foregoing claims, wherein said date fruit is of a species selected from *Phoenix dactylifera, Phoenix acaulis, Phoenix atlantica, Phoenix caespitosa, Phoenix canariensis, Phoenix loureiroi, Phoenix paludosa, Phoenix pusilla, Phoenix reclinata, Phoenix roebelenii, Phoenix rupicola, Phoenix sylvestris, Phoenix theophrasti;* preferably *Phoenix dactylifera;* more preferably *Phoenix dactylifera* L.

7. The composition according to any one of the foregoing claims, wherein said date fruit is of a variety selected from *Kholas, Ajwah, Al-Khunaizi, Amir Hajj, Bouffegous, Dabbas, Datça, Dayri, Empress, Fardh, Ftimi, Holwah, Haleema, Hayany, Iteema, Kenta, Khadrawi, Khastawi, Khenaizi, Lulu, Medjool, Mishriq, Mazafati, Nabtat-seyf, Piarom, Safawi, Sag'ai, Saidy, Sayer, Safrir, Sukkary, Sellaj, Indi, Tagyat, Tamej, Thoory, Umeljwary, Umelkhashab, Zahidi,* and *Zaghloul;* preferably *Kholas.*

8. The composition according to any one of the foregoing claims, wherein said date fruit is of a variety *Kholas.*

9. The composition according to any one of the foregoing claims, wherein said composition comprises or consists of particles having a particle size < 850 µm.

10. The composition according to any one of the foregoing claims, wherein said composition is a reference material, preferably a certified reference material, more preferably a certified reference material of date fruit elemental composition.

11. The composition according to any one of the foregoing claims, wherein said composition comprises nitrogen, oxygen, and silicon in a ratio of 6-9 : 80-85 : 4-7, preferably in a ratio of 7-8 : 82-83 : 5-6, e.g. about 7.7 : 82.1: 5.8, respectively.

12. Use of a composition of any one of claims 1-11 as a reference material, e.g. certified reference material, preferably for analyzing food quality and/or environmental pollution.

13. A method of preparing a homogenized, irradiated composition comprising a date fruit or component(s) thereof, preferably a composition of any one of claims 1-11, wherein said method comprises the steps:
a) providing a date fruit;
b) optionally, drying said date fruit, e.g. by freeze drying, heat drying, or vacuum drying, preferably heat drying in an oven at a temperature of from 40°C to 90°C, e.g. about 70°C;
c) homogenizing said date fruit to obtain a homogenized mixture; optionally by using a grinder;
d) irradiating said homogenized mixture of step c) to obtain an irradiated mixture, preferably by gamma ray irradiation, x-ray irradiation, and/or electron beam irradiation;
e) homogenizing said irradiated mixture of step d), preferably by using a grinder;
f) obtaining a homogenized, irradiated composition; preferably a homogenized, irradiated composition in the form of a powder;
g) optionally, storing said homogenized, irradiated composition in a light protected container.

14. The method according to claim 13, wherein said date fruit provided in step a) has a maturity stage selected from kimri, khalal, rotab, and tamar, preferably selected from rotab and tamar.

15. The method according to claim 13 or 14, wherein said irradiating in step d) comprises subjecting said homogenized mixture of step c) to irradiation, e.g. ionizing irradiation, preferably gamma ray irradiation, x-ray irradiation, and/or electron beam irradiation; wherein, preferably, an ionizing radiation dose absorbed by said homogenized mixture is in the range of from 1 kGy to 100 kGy, preferably 5 kGy to 50 kg, more preferably 10 kGy to 40 kGy, even more preferably 15 kGy to 35 kGy, e.g. about 25 kGy.
